# EUROPEAN PATENT APPLICATION

(11) **EP 4 668 767 A1**
(43) Date of publication of application: **24.12.2025**
(21) Application number: 24182845.8
(22) Date of filing: 18.06.2024
(51) Int. Cl.: H04N 23/60, G06F 16/783, H04N 23/68

(54) **ROLLING SHUTTER IMAGE DATA VERIFICATION**

(71) Applicant: Axis AB, 223 69 Lund (SE)
(72) Inventor: Keskikangas, Axel, 223 69 LUND (SE); Martinsson, Jenny, 223 69 LUND (SE); Andersson Engfors, Måns, 223 69 LUND (SE); Vasudevan, Anand, 223 69 LUND (SE)
(74) Representative: AWA Sweden AB

(57) **Abstract**

The present invention generally relates to the field of camera surveillance, and in particular to verifying image data in image data frames captured by a rolling shutter image sensor of a camera.

## Description

### TECHNICAL FIELD

The present invention generally relates to the field of camera surveillance, and in particular to verifying image data in image data frames captured by a rolling shutter image sensor of a camera.

### BACKGROUND

A challenge in digital video camera surveillance is to ensure authenticity and integrity of the captured video stream. One approach to improve security and data integrity is to sign the video with an encryption algorithm such that only the intended receiver can decrypt the signed video.

The signing of the video stream assumes that the video that is being signed is authentic before it is sent off to a receiver. In other words, tampering of the video stream may still occur prior to signing the video stream.

Accordingly, although signing the video stream provides a promising solution to ensure authenticity of the video stream, there is still improvements available to further improve the data security.

### SUMMARY

In view of above-mentioned and other drawbacks of the prior art, it is an object of the present invention to provide improvements with regards to verifying image data in image data frames captured by a rolling shutter image sensor of a camera.

According to a first aspect of the present invention, it is therefore provided a computer-implemented method to verify image data in image data frames captured by a rolling shutter image sensor of a camera, the rolling shutter image sensor comprising an array of pixels that are exposed and read-out line by line or column by column, the image sensor being configured to forward the captured image data frames to an encoder, the method comprising: receiving a stream of image data frames from the image sensor, detecting a moving object in the stream of image data frames, estimating a speed of the moving object from the stream of image data frames, measuring an amount of rolling shutter effect in the moving object from the stream of image data, calculating an expected amount of rolling shutter effect based on the estimated speed of the object and a time duration between pixel line or row readout, comparing the measured amount of rolling shutter effect to the calculated expected amount of rolling shutter effect, and providing a verification output that depends on the comparison.

An image sensor includes a matrix of pixels arranged in lines or rows and columns. In a rolling shutter sensor, images are captured one line or column at a time, leading to potential distortions in moving objects within a frame, known as the rolling shutter effect. That distortions are more prominent in moving objects since the object has time to move slightly relative camera between line or column exposure and capture.

The present invention is based upon the realization to verify the image data based on the natural progression of the object across the scene. That is, the amount of rolling shutter effect can be predicted with knowledge of the object speed and line readout time. The amount of pixels that the object has moved between readouts can be calculated from the object speed and the line (or column) readout time. The calculated amount of rolling shutter effect can be compared to the measured amount of rolling shutter effect. If the calculated amount of rolling shutter effect does not correspond to the measured amount of rolling shutter effect, the frame or frames may be suspect of fraud, and if they correspond, the frame or frames may be considered authentic.

The amount of rolling shutter effect may be quantified as the amount of pixels that the object shifts in the image data frame due to the delay in readout between the lines or columns.

A video stream is generally a set of consecutive encoded image data frames captured over time. The consecutive image frames collectively form the video stream. An image data frame is here the data captured by the rolling shutter image sensor. The rolling shutter image sensor comprises a matrix of pixels arranged in lines, or rows, and columns, preferably in a rectangular or square matrix.

It is appreciated that an object may herein refer to a material object, a person, or an animal, in other words, any type of object that may be captured in a video stream and that may be tracked. A material object may for example be a vehicle.

Object detection algorithms are *per se* known and may be selected from a range of algorithms including convolutional neural networks (CNNs), recurrent neural networks, decision tree classifiers such as random forest classifiers that are also efficient for classification. In addition, classifiers such as support vector machine classifiers and logistic regression classifiers are also conceivable. An object detection algorithm may be an object tracker employing a convolutional neural network trained for detecting and tracking objects according to its training. Furthermore, object/instance segmentation algorithms may also be applied for object detection.

In one embodiment, the stream of image data frames may be received directly from the image sensor, prior to encoding the stream of image data. In other words, the method is performed upstream to the encoder that encodes and signs the image data. This ensures to evaluate the authenticity of the image data frames that are subsequently encoded and signed. Thus, in this way the input data to the encoder is verified. The image data frames may be the raw data from the rolling shutter image sensor.

In one embodiment, the output may indicate an image frame as a suspect image frame when a deviation between the measured amount of rolling shutter effect and the calculated expected amount of rolling shutter effect is equal to or exceeds a predetermined level. That is, the deviation may be evaluated in view of a predetermined level or predetermined threshold. The threshold or level may be zero, where the deviation should exceed zero for the image frame to be indicated as suspect. The predetermined level is set based on the scene being monitored by the camera. That is, the threshold or level may be scene specific and may be set higher than zero to catch outliers. Furthermore, the threshold or level may depend on object size, for example, measuring pixels in x-direction (horizontal) will have more impact if the object is larger in the vertical direction. The threshold or level may for example be calculated as a ratio with object size in pixel height. As a further example, a threshold may be set based on the pixel speed of the detected object. For example, if the object moves 30 pixels per second the threshold for a 30 frame per second (fps) camera would be 1 pixel. That is the threshold may be pixel speed per second divided by frames per second. Naturally, variations with scaling factors such as 2 or 0.5 are also envisaged, thus the threshold may be the scaling factor multiplied by pixel speed per second divided by frames per second. The ability to flag suspect image frames based on predetermined level/threshold automates the process of identifying potential issues without manual oversight.

In one embodiment, the method may comprise counting the number of image frames that are suspect image frames, wherein a suspect image frame is an image data frame for which a deviation between the measured amount of rolling shutter effect and the calculated expected amount of rolling shutter effect is equal to or exceeds a predetermined level, wherein the provided output depends on the number of suspect image data frames. In case of only few suspect frames there may be no issue, however, with many suspect frames a more active or preventive action may be required, such as to not sign the video stream or group of image data frames, or delaying encoding until a reliable group of image data frames is received. This further improves the verification reliability of the video stream.

In one embodiment, providing an output may include one of marking meta data of the stream of image frames indicating that suspect image frames are included, forward the encoded video stream unsigned, and/or sign the encoded video stream with a key that is specific for video streams with suspect image data frames. By marking the metadata of image data streams that contain suspect frames, downstream processes are able to easily recognize and handle these frames appropriately. By not signing the video stream, or signing it with a specific key, provides a clear indication of the image data's integrity which in case of not singing it indicates possible authenticity issues.

In one embodiment, an exposure time of the image sensor may be shorter than a line readout time. The line readout time is the time duration from an initiated image captured in one pixel line or column until initiating the next line or column capture. Advantageously, a shorter exposure time reduces image blurring. Furthermore, the separation between different lines or columns is clearer when the exposure time is shorter than the line readout time, which facilitates measuring and/or calculating the amount of rolling shutter effect. The rolling shutter effect in itself is also clearer when the exposure time is shorter than the line readout time.

In one embodiment, the amount of rolling shutter effect may be calculated as an expected pixel shift per pixel line or column of the detected object based on the estimated speed of the object and a time duration between pixel line or column readout. Calculating the expected pixel shift allows for more sensitive and accurate anomaly detection. Even slight deviations from the expected shift can be detected, enabling earlier identification of potential issues with the integrity of the video image data.

In one embodiment, calculating the expected amount of rolling shutter effect may comprise determining a size of the object along one dimension in terms of number of pixel lines, calculating an object capture time from the determined object size and a line readout time, and calculating the expected amount of rolling shutter effect as a pixel shift based on the calculated object capture time and the estimated speed of the detected object. Hereby, an accurate algorithm for calculating the expected pixel shift is provided, thereby improving the verification reliability.

In one embodiment, measuring the amount of rolling shutter effect may be based on measuring the actual pixel shift of the detected object between pixel lines or rows.

The method may be performed locally in the camera. However, it is envisaged that the method may be performed in a remote server connected to a camera.

According to a second aspect, there is provided a control unit for performing the method according to anyone of the herein disclosed embodiments.

Further embodiments of, and effects obtained through this second aspect of the present invention are largely analogous to those described above for the first aspect and the second aspect of the invention.

According to a third aspect of the present invention, there is provided a system comprising a camera having a rolling shutter image sensor comprising an array of pixels that are exposed and read-out line by line or column by column, the image sensor being configured to forward captured image data frames to an encoder of the camera, and a control unit according to the second aspect.

In an embodiment, the control unit may be connected to an output of the image sensor to receive image data directly from the image sensor.

Further embodiments of, and effects obtained through this third aspect of the present invention are largely analogous to those described above for the first aspect and the second aspect of the invention.

According to a fourth aspect of the present invention, there is provided computer program product comprising program code for performing, when executed by a control unit, the method of any of the herein discussed embodiments.

Further embodiments of, and effects obtained through this fourth aspect of the present invention are largely analogous to those described above for the other aspects of the invention.

A computer program product is further provided including a computer readable storage medium storing the computer program. The computer readable storage medium may for example be non-transitory, and be provided as e.g. a hard disk drive (HDD), solid state drive (SDD), USB flash drive, SD card, CD/DVD, and/or as any other storage medium capable of non-transitory storage of data.

Further features of, and advantages with, the present invention will become apparent when studying the appended claims and the following description. The skilled addressee realize that different features of the present invention may be combined to create embodiments other than those described in the following, without departing from the scope of the present invention.

### BRIEF DESCRIPTION OF THE DRAWINGS

The various aspects of the invention, including its particular features and advantages, will be readily understood from the following detailed description and the accompanying drawings, in which:
Fig. 1 is a schematically illustrates an image capturing device according to embodiments of the invention;
Fig. 2 illustrates a matrix of pixels of a rolling shutter sensor according to embodiments of the invention;
Fig. 3A illustrates different positions of a moving object with respect to the matrix of pixles in fig. 2;
Fig. 3B illustrates a resulting image data frame according to embodiments of the invention;
Fig. 4 is a flow-chart of method steps according to embodiments of the present invention;
Fig. 5 is a box diagram of a system according to embodiments of the present invention;
Fig. 6A illustrates different positions of a moving object with respect to the matrix of pixles in fig. 2;
Fig. 6B illustrates a resulting image data frame according to embodiments of the invention;
Fig. 7 is a flow-chart of method steps according to embodiments of the invention; and
Fig. 8 illustrates a moving object with respect to the matrix of pixles in fig. 2.

### DETAILED DESCRIPTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person. Like reference characters refer to like elements throughout.

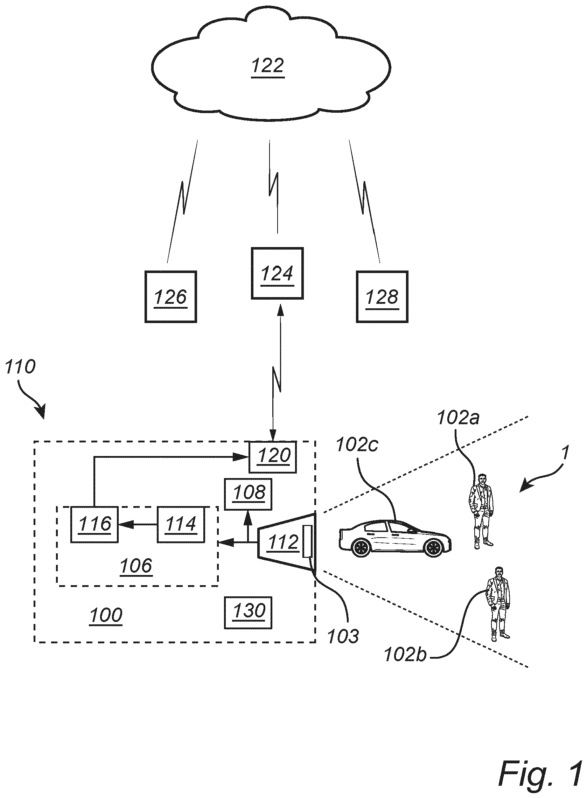

Turning now to the drawings and to fig 1 in particular, there is shown a scene 1 being monitored by an image capturing device 100, e.g., a camera or more specifically a surveillance camera. In the scene 1, there is a set of objects 102a-c, here exemplified as people 102a-b or vehicles 102c present in the scene 1.

The camera 100 is continuously monitoring the scene 1 by capturing a video stream of images of the scene 1 and the objects 102a-c therein. The camera 100 and a control unit 106 are part of a system 110, where the control unit 106 may either be a separate stand-alone control unit or be part of the camera 100. It is also envisaged that the control unit 106 is remotely located such as on a server and thus operates as a Cloud-based service.

The camera 100 may be mounted on a building, on a pole, or in any other suitable position depending on the specific application at hand. Further the camera 100 may be a fixed camera or a movable camera such as pan, tilt and zoom, or even a body worn camera. Further, the camera 100 may be a visible light camera, an infrared (IR) sensitive camera or a thermal (long-wavelength infrared (LWIR)) camera. Further, image acquisition devices employing LIDAR and radar functionalities may also be conceivable. It is also envisaged that the camera 100 is a combination of the mentioned camera technologies.

The camera 100 further comprises an image capturing module 112, an image processing pipeline 114, an encoder 116, a data storage 130, and optionally an input and output interface 120 configured as a communication interface between the camera 100 and a network 122 via a radio link 124.

The image capturing module 112 comprises various components such as a lens and a rolling shutter image sensor 103, where the lens is adapted to project an image onto the image sensor 103 comprising multiple pixels. The rolling shutter image sensor 103 comprises an array of pixels that are exposed and read-out line by line or column by column. The image data from the image sensor is forwarded to the image processing pipeline 114 and the encoder 116.

The image processing pipeline 114 is configured to perform a range of various operations on image frames received from the image sensor. Such operations may include filtering, demosaicing, color correction, noise filtering for eliminating spatial and/or temporal noise, distortion correction for eliminating effects of e.g., barrel distortion, global and/or local tone mapping, e.g., enabling imaging of scenes containing a wide range of intensities, transformation, e.g., rotation, flat-field correction, e.g., for removal of the effects of vignetting, application of overlays, e.g., privacy masks, explanatory text, etc. However, it should be noted that some of these operations, e.g., transformation operations, such as correction of barrel distortion, rotation, etc., may be performed by one or more modules, components or circuits arranged outside the image processing pipeline 114, for example in one or more units between the image processing pipeline 114 and the encoder 116.

Following the image processing pipeline 114, the image frames are forwarded to the encoder 116, in which the image frames are encoded according to an encoding protocol, signed, and forwarded to a receiver, e.g., a client 126 and/or a server 128, over the network 122 using the input/output interface 120. It should be noted that the camera 100 illustrated in fig. 1 also includes numerous other components, such as processors, memories, etc., which are common in conventional camera systems and whose purpose and operations are well known to those having ordinary skill in the art. Such components have been omitted from the illustration and description of fig. 1 for clarity reasons.

The camera 100 may also comprise the data storage 130 for optionally storing data relating to the capturing of the video stream. Thus, the data storage may store the captured video stream. The data storage may be a non-volatile memory, such as an SD card.

There are a number of conventional video encoding formats. Some common video encoding formats that work with the various embodiments of the present invention include: JPEG, Motion JPEG (MJPEG), High Efficiency Video Coding (HEVC), also known as H.265 and MPEG-H Part 2; Advanced Video Coding (AVC), also known as H.264 and MPEG-4 Part 10; Versatile Video Coding (VVC), also known as H.266, MPEG-I Part 3 and Future Video Coding (FVC); VP9, VP10 and AOMedia Video 1 (AV1), just to give some examples.

A control unit 108 is configured to verify image data in in image data frames captured by the rolling shutter image sensor 203 in the module 112. The control unit 108 is connected to an output of the image sensor 103 to receive image data directly from the image sensor 103. In other words, the image data is received prior to encoding the stream of image data in the encoder 116. The control unit 108 is part of the system 110.

Generally, the control unit 108 and/or control unit 106 operates algorithms for object detection. Such algorithms may be selected from a range of algorithms including convolutional neural networks (CNNs), recurrent neural networks, decision tree classifiers such as random forest classifiers that are also efficient for classification. In addition, classifiers such as support vector machine classifiers and logistic regression classifiers are also conceivable. The algorithms for object detection used for the image data verification run upstream of the image processing pipeline 114, by the control unit 108.

The encoded video stream is signed and transmitted to a receiver, e.g., the client 126 and/or the server 128, over the network 122 using the input/output interface 120. Signing the encoded video stream ensures that only the intended receiver can access the video stream and that the encoded video stream has not been tampered with. However, this signing does not account for tampering that occurs prior to encoding the image data frames. The embodiments of the present disclosure address this issue based on studying the rolling shutter effect in the image data frames.

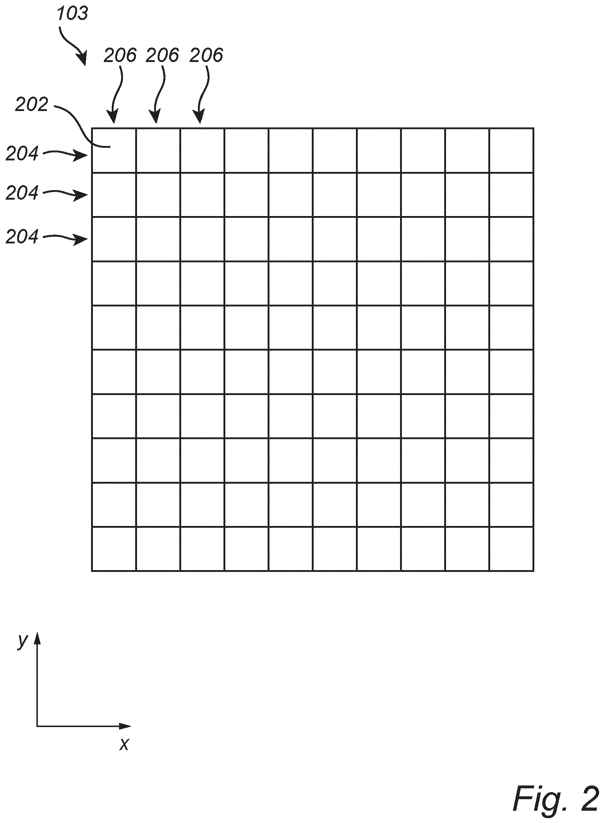

Fig. 2 illustrates a matrix of pixels 202 (only one is numbered) of a rolling shutter sensor 103. The pixels 202 are arranged in a set of lines 204 or rows and columns 206 (not all are numbered) in a rectangular or square geometry with lines 204 in the horizontal x-direction and columns 206 vertical y-direction. In a rolling shutter image sensor 103, the lines 204 or columns 206 are exposed and read out one by one. The delay or time duration between pixel line or column read-out is herein referred to as line readout time.

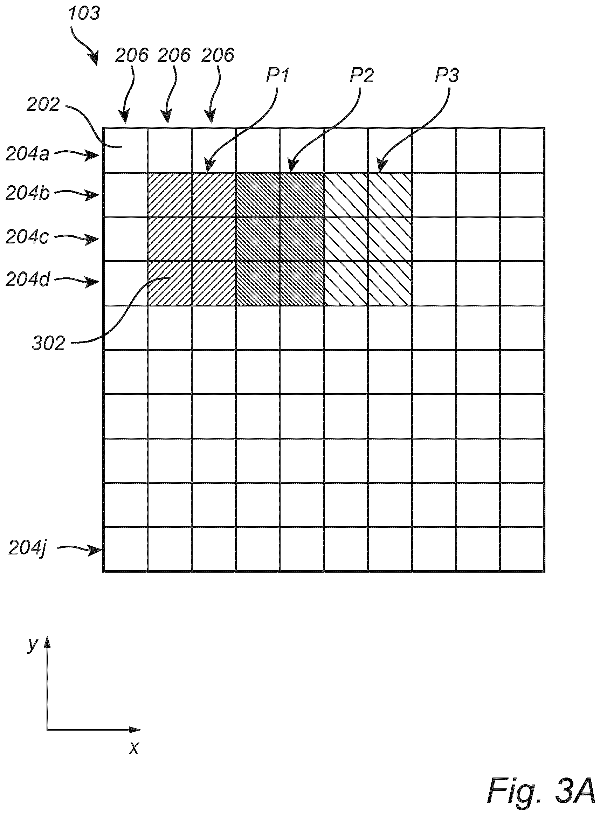

The rolling shutter effect will now be discussed with reference to figs 3A-B.

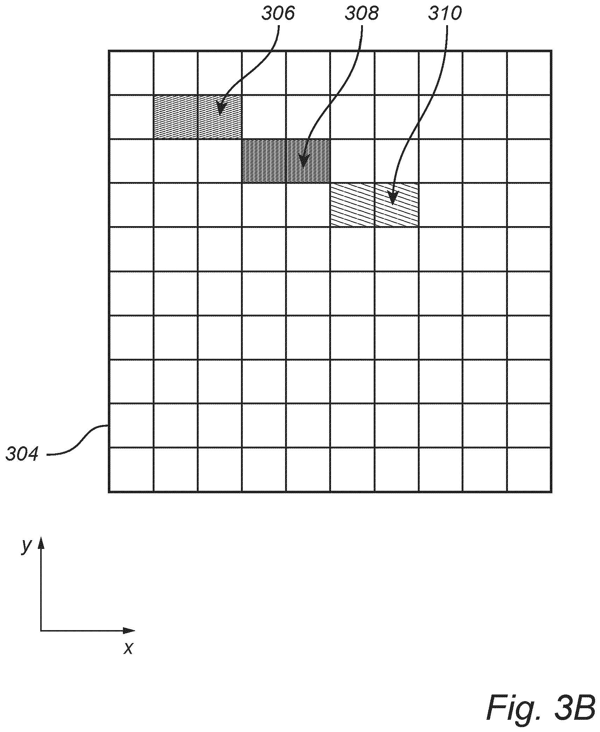

Fig. 3A illustrates three different positions P1, P2, P3 of a moving object 302 with respect to the matrix of pixels 202 at three different times during exposure and read-out of one image data frame from the rolling shutter image sensor 103. Fig. 3B illustrates the resulting image data frame 304. This example is simplified and exaggerated to provide clarity.

When exposing and reading out an image data frame line by line, the first line may be the topmost line 204a, followed by lines 204b, 204c, 204d,...204j. Since there is a time duration between initiating readout of the lines 204b-d that overlap with the moving object 302, the object 302 will have moved between readouts of lines 204b-d.

In other words, in this example, the object 302 is at position P1 when reading out the line 204b resulting in image patch 306, the object 302 is at position P2 when reading out the line 204c resulting in image patch 308, the object 302 is at position P3 when reading out the line 204d resulting in image patch 310. Overall, the image 304 of the rectangular object 302 is skewed in the image data frame 304 due to the line-by-line readout. The skewing or distortion is known as the rolling shutter effect.

If the speed of the moving object is known, or estimated from the image data frames, and the line read-out time is known from the rolling shutter image sensor characteristics, the expected amount of rolling shutter effect can be calculated. Generally, the speed multiplied by the line readout time gives the distance the object has moved between read-outs, the distance can translate to number of pixels. Thus, the amount of rolling shutter effect can be quantified as the number of pixels that the object has moved between readout of adjacent lines, or stated otherwise, as the pixel-shift between readout of adjacent lines. In this example, the object has moved by two pixels per line readout, or equally by two pixels columns 206.

Whether the readout is line by line or column by column depends on the image sensor, but both are applicable to the embodiments described herein.

As discussed above, the expected amount of rolling shutter effect can be calculated based on the estimated speed of the object 302 and a time duration between pixel line 204 or column readout 206. The amount of rolling shutter effect can also be measured from the image data frames 304. Algorithms for measuring the amount of rolling shutter effect are known as such.

One way to measure the amount of rolling shutter effect is based on measuring the actual pixel shift of the detected object 302 between pixel lines 204 or columns. In other words, taking the shape or outline of the object into account, the amount of pixel shift between lines can be measured from the image data frame 304. In this simplified example with a rectangular object 302, the images patches 306 and 308 are shifted by two pixels, and the same pixel shift is present between patches 308 and 310.

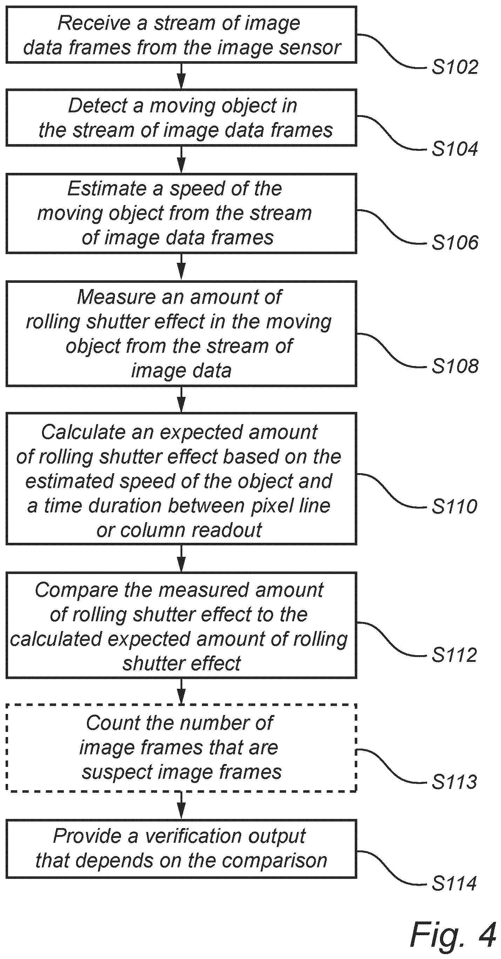

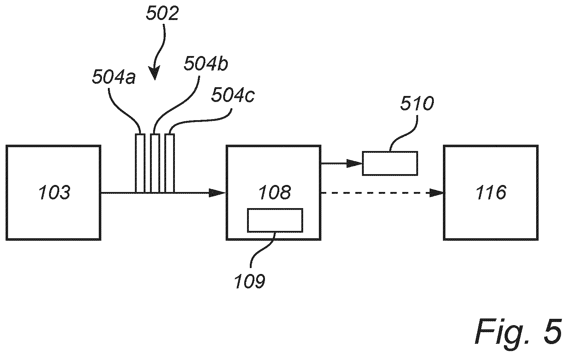

Fig. 4 is a flow-chart of method steps according to embodiments of the present invention. The method is a computer-implemented method to verify image data in image data frames 304 captured by a rolling shutter image sensor 103 of a camera 100. The rolling shutter image sensor 103 comprising an array of pixels 202 that are exposed and read-out line by line 204 or column by column 206. The image sensor 103 being configured to forward the captured image data frames 304 to an encoder 116. The flow chart will be described in conjunction with the simplified box diagram in fig. 5 of a rolling shutter sensor 103, the control unit 108 and the encoder 116.

In step S102, receiving, by the control unit 108, a stream 502 of image data frames 504a-c from the image sensor 103. Preferably, the stream 502 of image data frames 504a-c is received directly from the image sensor 103 prior to encoding the stream of image data. That is, the control unit 108 performs the verification described herein before the image data frames 504a-c are encoded and signed by the encoder 116. The encoding step may be preceded by image processing as described with reference to fig 1.

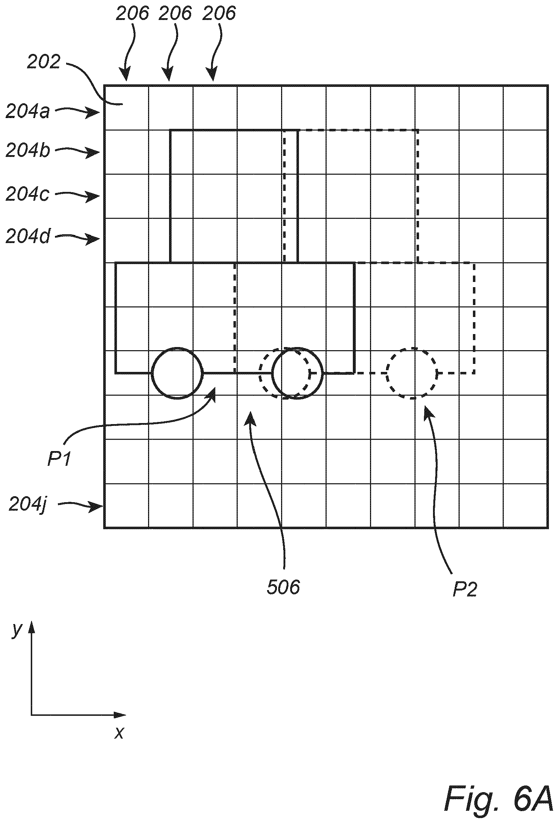

In step S104, detecting, by the control unit 108, a moving object 506 in the stream 502 of image data frames 504a-c. An example moving object 506 is shown in fig. 6A overlayed with the pixel matrix of the sensor 103. Object detection may be performed by known algorithms capable of determining the outline of an object 506 in an image data frame 504a-c. Example algorithms include object segmentation or object instance algorithms. In general, object segmentation algorithms are configured to find and show the location of all objects of the same class, e.g. humans, whereas instance segmentation algorithms will attempt to separate each instance of human into individual masks. Some specific example algorithms include Otsu's Image segmentation (Threshold-based segmentation), Edge-based image segmentation algorithms, Region-based image segmentation algorithm, Clustering-based image segmentation algorithms using Python, Neural networks for image segmentation using python, and Watershed image segmentation algorithm using python.

In step S106, estimating, by the control unit 108, a speed of the moving object 506 from the stream 502 of image data frames 504a-c. For example, by calulating the position shift of the object 506 between frames 504a-c, and with knowledge of the frame rate of the camera including the image sensor 103, the object speed in the plane of the image sensor 103 pixel matrix can be estimated. The speed can for example be in pixles/second or pixel/frame.

In step S108, measuring, by the control unit 108 an amount of rolling shutter effect in the moving object 506 from the stream 502 of image data frames 504a-c. Measuring the amount of rolling shutter effect is based on measuring the actual pixel shift of the detected object 506 between pixel lines or columns.

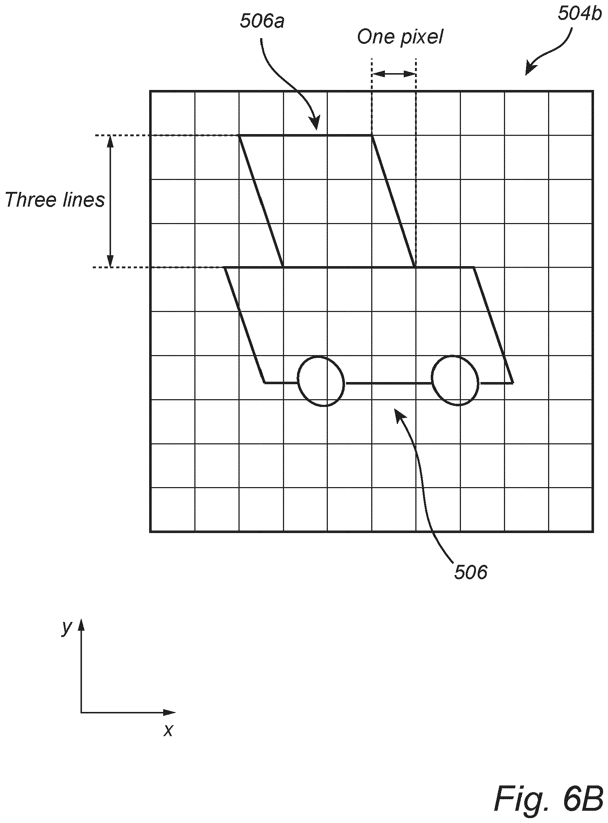

Fig. 6B illustrates the image data frame 504b resulting from capturing an image of the moving object 506 shown in fig. 6A. The object 506, in this case a vehicle 506, moves from left to right. If the readout starts from the top line 204a and ends with the bottom line 204j, the image 506b of the object 506 will be somehat skewed due to the rolling shutter effect. In this case, if the upper part 506a of the object 506 is selected to be evaluated, the pixel shift, or amount of rolling shutter effect is approxiamtely one pixel in three lines.

In step S110, calculating, by the control unit 108, an expected amount of rolling shutter effect based on the estimated speed of the object 506 and a time duration between pixel line or column readout. The object speed is determined in step S106, and the line readout time is known from the settings of the rolling shutter image sensor 103 and may be acquired therefrom or pre-set in the control unit 108. With this knownledge, the expected pixel shift can be calculated.

In step S112, comparing, by the control unit 108, the measured amount of rolling shutter effect to the calculated expected amount of rolling shutter effect.

In step S114, providing, by the control unit 108, a verification output 510 that depends on the comparison. For example, if the calculated expected amount of rolling shutter effect corresponds to the measured amount of rolling shutter effect, then it can be concluded that the image data frame 504b is authentic, and the image data frame 504b can be forwarded to the encoder 116 without action concerning authenticity issues.

However, if the comparison in step S112 indicates a deviation between the measured amount of rolling shutter effect and the calculated expected amount of rolling shutter effect that is equal to or exceeds a predetermined level, the image data frame 504b may be indicated as a suspect image frame. For example, the calculated expected amount of rolling shutter effect may be 2 pixels per 3 lines which is one pixel more than the measured amount of rolling shutter effect. This deviation may be indicative of that the image data frame 504b has been tampered with.

The predetermined level may be preset, or it may be scene dependent. For example, for a specific scene with expected type of objects, it may be tested before implementation what is an expected amount of rolling shutter effect and set the predetermined threshold level accordingly. Alternatively, a threshold or level is set high to only catch extreme outliers. As a further alternative, the predetermined level can be based on object speed or on the object class & size, for example, humans move at certain rates which can be used for setting a reasonable predetermined level of deviation between measured and calculated amount or rolling shutter effect.

Furthermore, the predetermined level may depend on object size since measuring in pixels in x-direction will have more impact if the object is larger.

In one embodiment, the control unit 108 is configured to count, in optional step S113, the number of image frames that are suspect image frames. The provided output 510 depends on the number of suspect image data frames. In other words, the control unit 108 keeps track of, e.g., in a memory 109, the number of suspect image frames. The severity of authenticity issues and data security breach may depend on the number of suspect image frames. For example, is only a single image data frame is indicated as suspect image frame over the course of a time duration such as minutes or hours, then the authenticity may not be questioned. However, if a large number of consecutive image frames are marked as suspect, authenticity issues may be concluded, and the video stream, or at least a group of pictures, GOP, of the video stream may be provided with some indication thereof.

Therefore, providing an output in step S114 may include marking meta data of the stream of image frames indicating that suspect image frames are included. This may be used when only few image frames are marked as suspect and provides for keeping track of suspect image frames.

In another alternative, providing an output in step S114 may include to forward the encoded video stream unsigned. Not signing the video stream indicates to the receiver that authenticity issues have been found in the video stream, and the marked image data frames may be analyzed.

In another alternative, providing an output in step S114 may include to sign the encoded video stream with a key that is specific for video streams with suspect image data frames.

Preferably, an exposure time of the image sensor 103 is shorter than a line readout time. This ensures that there is no leakage or bleedover between lines. That is, only one line at the time is exposed.

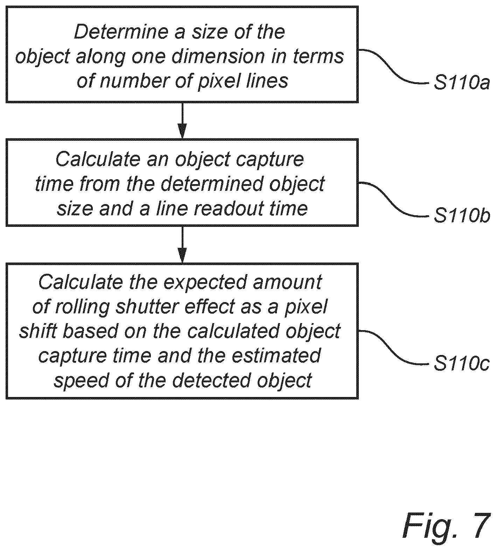

Fig. 7 is a flow-chart of method steps for calculating the expected amount of rolling shutter effect according to one embodiment.

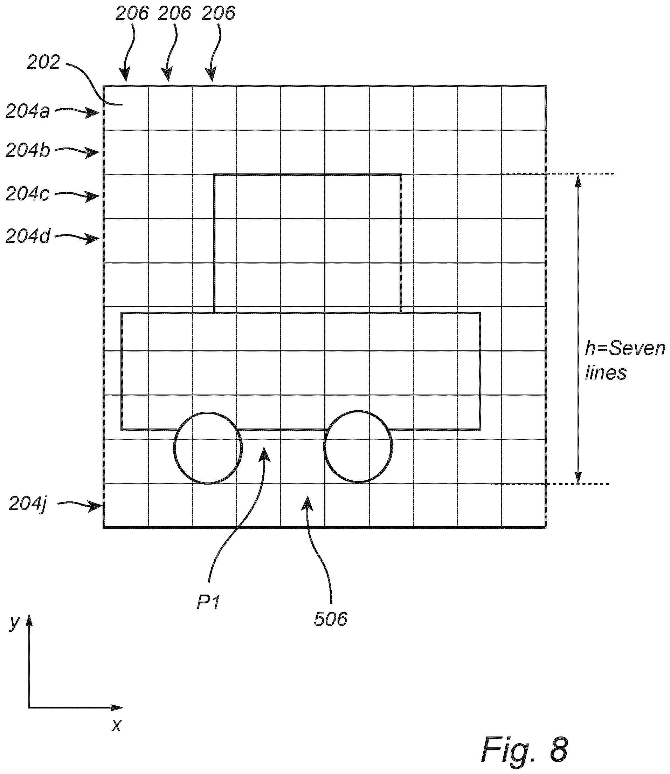

In step S110a, determining, by the control unit 108, a size of the object 506 shown in fig. 8 along one dimension in terms of number of pixel lines. Fig. 8 illustrates the example of a vehicle 506 similar to fig. 6A. If the readout is line-by-line 204a-j, then the size is preferably the object height, h. In this example, the entire object 506 is evaluated as a whole, but specific objects parts may equally well be selected as described with reference to figs. 6A-B. The height, h, in the y-direction of the pixel array may be determined in terms of number of pixel lines 204. In this schematic example, the height, h, is seven pixel lines.

In step S110b, calculating, by the control unit 108, an object capture time from the determined object size and a line readout time. The object capture time is the total time it takes to read out the number of lines that equals the object height, h, in terms of number of pixel lines. So, in this example, the object capture time is 7 multiplied by the line readout time.

In step S110c, calculating, by the control unit 110c, the expected amount of rolling shutter effect as a pixel shift based on the calculated object capture time and the estimated speed of the detected object. That is, the pixel shift corresponds to the distance travelled by the object, in terms of pixel columns, during the object capture time. The expected pixel shift is object capture time multiplied by the estimated speed of the detected object in terms of pixels per second.

In the examples described above, the object 302, 506 is moving in the horisontal direction, the x-direction, and the image sensor 103 is read-out line by line where the lines 204 lay along the the horisontal direction, the x-direction. However, similar methoddology as the above apply to read out column-to-column 206 but wih the rooling shutter effect being more prominent along the vertical y-axis.

The method described may preferably be performed locally in the camera 100. However, it is also envisaged that the method is performed in a remote server connected to camera 100.

There is further provided a computer program comprising instructions which, when the program is executed by a computer, cause the computer to carry out the method of any one of the herein disclosed embodiments. The computer program may be stored or distributed on a data carrier. As used herein, a "data carrier" may be a transitory data carrier, such as modulated electromagnetic or optical waves, or a non-transitory data carrier. Non-transitory data carriers include volatile and non-volatile memories, such as permanent and non-permanent storage media of magnetic, optical or solid-state type. Still within the scope of "data carrier", such memories may be fixedly mounted or portable.

The control unit includes a microprocessor, microcontrol unit, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontrol unit or programmable digital signal processor mentioned above, the processor may further include computer executable code that controls operation of the programmable device.

The control functionality of the present disclosure may be implemented using existing computer processors, or by a special purpose computer processor for an appropriate system, incorporated for this or another purpose, or by a hardwire system. Embodiments within the scope of the present disclosure include program products comprising machine-readable medium for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable medium. Thus, any such connection is properly termed a machine-readable medium. Combinations of the above are also included within the scope of machine-readable media. Machine-executable instructions include, for example, instructions and data which cause a general-purpose computer, special purpose computer, or special purpose processing machines to perform a certain function or group of functions.

Although the figures may show a sequence the order of the steps may differ from what is depicted. Also, two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule-based logic and other logic to accomplish the various connection steps, processing steps, comparison steps and decision steps. Additionally, even though the invention has been described with reference to specific exemplifying embodiments thereof, many different alterations, modifications and the like will become apparent for those skilled in the art.

In addition, variations to the disclosed embodiments can be understood and effected by the skilled addressee in practicing the claimed invention, from a study of the drawings, the disclosure, and the appended claims. Furthermore, in the claims, the word "comprising" does not exclude other elements or steps, and the indefinite article "a" or "an" does not exclude a plurality.

## Claims

1. A computer-implemented method to verify image data in image data frames (304) captured by a rolling shutter image sensor (103) of a camera (100), the rolling shutter image sensor (103) comprising an array of pixels (202) that are exposed and read-out line (204) by line or column (206) by column, the image sensor (103) being configured to forward the captured image data frames (304) to an encoder (116), the method comprising:
receiving (S102) a stream (502) of image data frames (504, 304) from the image sensor (103),
detecting (S104) a moving object (302, 506) in the stream of image data frames,
estimating (S106) a speed of the moving object from the stream of image data frames,
measuring (S108) an amount of rolling shutter effect in the moving object from the stream of image data,
calculating (S110) an expected amount of rolling shutter effect based on the estimated speed of the object and a time duration between pixel line or column readout,
comparing (S112) the measured amount of rolling shutter effect to the calculated expected amount of rolling shutter effect, and
providing (S114) a verification output (510) that depends on the comparison.

2. The method according to claim 1, the stream of image data frames is received directly from the image sensor prior to encoding the stream of image data.

3. The method according to any one of claims 1-2, the output indicating an image frame as a suspect image frame when a deviation between the measured amount of rolling shutter effect and the calculated expected amount of rolling shutter effect is equal to or exceeds a predetermined level.

4. The method according to any one of claims 1-3, comprising counting (S113) the number of image frames that are suspect image frames, wherein a suspect image frame is an image data frame for which a deviation between the measured amount of rolling shutter effect and the calculated expected amount of rolling shutter effect is equal to or exceeds a predetermined level, wherein the provided output depends on the number of suspect image data frames.

5. The method according to claim 4, wherein the predetermined level is set based on the scene being monitored by the camera.

6. The method according to any one of claims 3-4, providing an output includes one of marking meta data of the stream of image frames indicating that suspect image frames are included, forward the encoded video stream unsigned, and/or sign the encoded video stream with a key that is specific for video streams with suspect image data frames.

7. The method according to any one of the preceding claims, wherein an exposure time of the image sensor is shorter than a line readout time.

8. The method according to any one of the preceding claims, the amount of rolling shutter effect is calculated as an expected pixel shift per pixel line or row of the detected object based on the estimated speed of the object and a time duration between pixel line or row readout.

9. The method according to claim 8, wherein calculating the expected amount of rolling shutter effect comprises:
determining (S110a) a size of the object along one dimension in terms of number of pixel lines,
calculating (S110b) an object capture time from the determined object size and a line readout time, and
calculating (S110c) the expected amount of rolling shutter effect as a pixel shift based on the calculated object capture time and the estimated speed of the detected object.

10. The method according to any one of the preceding claims, wherein measuring the amount of rolling shutter effect is based on measuring the actual pixel shift of the detected object between pixel lines or columns.

11. The method according to any one of the preceding claims, performed locally in the camera, or in a remote server connected to camera.

12. A control unit (108) for performing the method according to any one of the preceding claims.

13. A system (110) comprising a camera having a rolling shutter image sensor comprising an array of pixels that are exposed and read-out line by line or column by column, the image sensor being configured to forward captured image data frames to an encoder of the camera, and a control unit (108) according to claim 13.

14. The system (110) of claim 14, the control unit (108) being connected to an output of the image sensor to receive image data directly from the image sensor.

15. A computer program product comprising program code for performing, when executed by a control unit, the method of any one of claims 1 to 11.

## Amended claims

### Amended claims in accordance with Rule 137(2) EPC.

1. A computer-implemented method to verify the authenticity of image data in image data frames (304) captured by a rolling shutter image sensor (103) of a camera (100), the rolling shutter image sensor (103) comprising an array of pixels (202) that are exposed and read-out line (204) by line or column (206) by column, the image sensor (103) being configured to forward the captured image data frames (304) to an encoder (116), the method comprising:
receiving (S102) a stream (502) of image data frames (504, 304) from the image sensor (103),
detecting (S104) a moving object (302, 506) in the stream of image data frames,
estimating (S106) a speed of the moving object in the plane of the pixel matrix (202) from the stream of image data frames based on a frame rate of the camera and by calculating a position shift of the object between image frames,
measuring (S108) an amount of rolling shutter effect in the moving object from the stream of image data by measuring the actual pixel shift of the detected object between pixel lines or columns in an image data frame (504, 304),
calculating (S110) an expected amount of rolling shutter effect based on the estimated speed of the object and a time duration between pixel line or column readout,
comparing (S112) the measured amount of rolling shutter effect to the calculated expected amount of rolling shutter effect, and
providing (S114) a verification output (510) that depends on the comparison and that is indicative of the authenticity of the image data.

2. The method according to claim 1, the stream of image data frames is received directly from the image sensor prior to encoding the stream of image data.

3. The method according to any one of claims 1-2, the output indicating an image frame as a suspect image frame when a deviation between the measured amount of rolling shutter effect and the calculated expected amount of rolling shutter effect is equal to or exceeds a predetermined level.

4. The method according to any one of claims 1-3, comprising counting (S113) the number of image frames that are suspect image frames, wherein a suspect image frame is an image data frame for which a deviation between the measured amount of rolling shutter effect and the calculated expected amount of rolling shutter effect is equal to or exceeds a predetermined level, wherein the provided output depends on the number of suspect image data frames.

5. The method according to claim 4, wherein the predetermined level is set based on the scene being monitored by the camera.

6. The method according to any one of claims 3-4, providing an output includes one of marking meta data of the stream of image frames indicating that suspect image frames are included, forward the encoded video stream unsigned, and/or sign the encoded video stream with a key that is specific for video streams with suspect image data frames.

7. The method according to any one of the preceding claims, wherein an exposure time of the image sensor is shorter than a line readout time.

8. The method according to any one of the preceding claims, the amount of rolling shutter effect is calculated as an expected pixel shift per pixel line or row of the detected object based on the estimated speed of the object and a time duration between pixel line or row readout.

9. The method according to claim 8, wherein calculating the expected amount of rolling shutter effect comprises:
determining (S110a) a size of the object along one dimension in terms of number of pixel lines,
calculating (S110b) an object capture time from the determined object size and a line readout time, and
calculating (S110c) the expected amount of rolling shutter effect as a pixel shift based on the calculated object capture time and the estimated speed of the detected object.

10. The method according to any one of the preceding claims, performed locally in the camera, or in a remote server connected to the camera.

11. A control unit (108) for performing the method according to any one of the preceding claims.

12. A system (110) comprising a camera having a rolling shutter image sensor comprising an array of pixels that are exposed and read-out line by line or column by column, the image sensor being configured to forward captured image data frames to an encoder of the camera, and a control unit (108) according to claim 11.

13. The system (110) of claim 12, the control unit (108) being connected to an output of the image sensor to receive image data directly from the image sensor.

14. A computer program product comprising program code for performing, when executed by a control unit, the method of any one of claims 1 to 10.
